(19) Europäisches Patentamt
European Patent Office
Office européen des brevets

(11) EP 2 073 463 A1

(12) EUROPEAN PATENT APPLICATION

(43) Date of publication:
24.06.2009 Bulletin 2009/26

(51) Int Cl.:
*H04L 12/56* (2006.01)

(21) Application number: 07425817.9

(22) Date of filing: 21.12.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(71) Applicants:
• Nokia Siemens Networks S.p.A.
20126 Milano (IT)
• Nokia Siemens Networks Oy
02610 Espoo (FI)

(72) Inventors:
• Frediani, Antonio Federico
20142 Milano (IT)
• Redana, Simone
25034 Orzinovi (BS) (IT)

(74) Representative: Fischer, Michael
Nokia Siemens Networks GmbH & Co. KG
Intellectual Property Rights
P.O. Box 80 17 60
81617 München (DE)

(54) **Method and device for setting QoS parameters for predictive scheduling in wireless communication systems**

(57) Scheduling of active data flows in a wireless communication system with centralised scheduling takes advantage of a mapping of QoS requirements of the various active flows with parameters of the scheduler. For such a mapping, a utility function, identified by at least two parameters $\alpha$, $\beta$, is computed for each flow. The first parameter is related with the accumulated latency $L^{acc}$ of the flow and the second parameter depends on the first parameter, the priority and the maximum desired utility. The flow to which a basic resource entity is allocated at a scheduling instant is chosen according to the function and on the basis of current and new rates $R_i^{current}$, $R_i^{new}$ of each flow predicted at the scheduling instant by taking into account both observed past allocations in an observation window and a prediction of future allocations in a prediction window.

FIG. 4

**Description**

Field of the invention

The present invention refers to mobile wireless communication systems, and more particularly it concerns a method of and a device for setting Quality of Service (QoS) parameters for predictive scheduling, i.e. for selecting the users, or the flows, to which communication resources are to be assigned at a given instant, in wireless communication systems with centralised scheduling.

Background of the Invention

The scarce radio spectrum allocated to mobile wireless communication, coupled with the continuous growth of user population, requires strategies for efficiently using available radio resources.

In recent years multiuser diversity has gained a lot of attention as a means to increase spectral efficiency. Multiuser diversity is a mode of diversity that adds to the traditional time, frequency and space diversity exploited in wireless systems. It results from the fact that different users in a multiuser environment experience almost mutually independent channel characteristics, so that there is a high probability that at least one user has a good channel at any given scheduling instant.

A scheduling technique taking into account multiuser diversity and providing a good trade-off between throughput and fairness is known as "Proportional Fair Scheduling" (PFS) and is disclosed for instance in WO 01/01722 A1 and in the article "Opportunistic Beamforming Using Dumb Antenna" by P. Viswanath, D. Tse, R. Laroia, IEEE Transactions on Information Theory, June 2002, pages 1277 - 1294. According to the PFS technique, the scheduler keeps track of the average throughput of the users in a past observation window of predetermined length and allots the resources to the user having the largest ratio between the rate the user's channel can support (requested data rate) and the average throughput in the observation window.

The paper "Channel Predictive Proportional Fair Scheduling", by H. J. Bang, T. Ekman, D. Gesbert, available from the Internet site http://www.eurecom.fr/~gesbert/ and submitted the 20th of September 2006 for publication in IEEE Transactions on Wireless Communications, generalises the PFS algorithm by taking into account also predictions of the users' future supportable rates. Taking advantage also of the channel prediction, for which quite accurate algorithms already exist, improves the resource exploitation. By using the concept of "utility function" (it is recalled that a utility function is a function quantifying the benefit of usage of certain resources, and in wireless networks such function is a non-decreasing function of the data rate, see e.g. the articles by G. Song and Y. Le: "Cross-Layer Optimization for OFDM Wireless Networks - Part I: Theoretical Framework", and "Cross-Layer Optimization for OFDM Wireless Networks - Part II: Algorithm Development", IEEE Transactions on Wireless Communications, March 2005, pages 614 - 624 and 625 - 634), the paper shows that the PFS or the PPFS technique result in allotting resources to the user exhibiting the largest instant increase in his/her individual utility function and this in turn corresponds to optimising an overall utility function of the system. The utility function of the system is dependent on the predicted average throughput, and in particular is the sum of the logarithms of the average throughputs of all active users.

A problem with the PFS and PPFS techniques is that they consider only the maximum rate supported by a given channel condition. This can be insufficient for providing a satisfactory allocation of resources. On the one hand, in current mobile systems many applications have been shifted to multimedia platforms in order to present information more effectively, and the Quality of Service (QoS) provisioning for multimedia applications over wireless networks requires considering user needs. In this respect, central is the concept of representing a multimedia connection in terms of multiple user flows, having each its own QoS requirements. On the other hand, studies are in progress for developing broadband wireless access systems having the ability to provide high data rates and QoS for supporting multimedia streams in a variety of scenarios and environments, ranging from indoor to wide area urban scenarios, so that a rather wide range of velocities of mobile user terminals have to be accommodated. The QoS is represented by a number of parameters that can be dependent on the individual application, and maximum rate is only one of such parameters. For instance, in systems conforming to IEEE Standard 802.16, in which the present invention can be suitably applied, QoS parameters may include a minimum rate that has to be assigned to a user flow in order to be able to provide a required service, a maximum sustainable rate and a maximum latency or delay between reception of a packet and its transmission.

The QoS aspects are not taken into account by the prior art discussed above.

WO-A 01/01722 mentions that, if resources can be allotted to more than one user in each time slot, then the existence of different classes of service characterised by different bit rate requirements, such as "constant bit rate" (e.g. voice traffic), "variable bit rate" (e.g. video traffic) or "available bit rate" (e.g. Internet traffic) is taken into account. In such case, the constant bit rate users are served first; then, if additional power is available, the variable bit rate users are served and eventually available bit rate users are served, as long as the power budget is reached. The method is scarcely flexible in that it does not take into account that a same class of services can have many variants (e.g. video traffic with different rates or Internet access with different bandwidths).

The paper by H.J. Bang et al. states that "the objective function should reflect the objective goals of the scheduling and can be a function of a number of parameters including but not necessarily limited to prediction of the user future rates": yet, the paper does not provide any indication about which parameters other than the rate prediction could be used, and above all, does not contain any indication about a possible relation of the utilisable parameters and the QoS demanded by a user.

It is the main object of the present invention to provide a method for setting QoS parameters for predictive user scheduling in wireless communication systems with centralised scheduling, which method allows designing a simple and effective scheduler that is suitable for systems where accommodating users handling data flows with different QoS requirements.

It is another object of the present invention to provide a device for implementing the method.

It is yet another object of the present invention to provide a scheduling method which is based on a mapping of the user requirements performed by the above method of setting QoS parameters.

It is a further object of the present invention to provide a base station for a wireless communication system, and a wireless communication system including such a base station, in which scheduling is based on the above method of setting QoS parameters.

Summary of the Invention

According to a first aspect of the invention, there is provided a method of A method of setting Quality-of-Service, QoS, parameters relevant to a plurality of active data flows for predictive centralised user scheduling in a wireless communication system, the method comprising, at each scheduling instant, the steps of:

- computing for each active flow, a first parameter related with an accumulated delay of the data of the flow and a second parameter, depending on the first parameter and intended to control a priority among the different flows;
- computing, by using said first and second parameters, a utility function for each active flow, which function is a non-decreasing function of the flow rate and exhibits a linear dependency on the rate according to said first parameter in a first rate range extending below a minimum rate admitted for the flow, and according to said second parameter in a second rate range extending from said minimum rate to a peak rate; and
- allocating a basic resource entity to an active flow selected based on the values taken by the utility function of each active flow for a respective current rate value, which is the rate predicted at a current scheduling instant by considering both past allocations in an observation window spanning over a first number of consecutive scheduling intervals and a prediction of future allocations in a prediction window spanning over a second number of consecutive scheduling intervals including the current one, and by assuming that the basic resource entity is not allocated to any flow, and a respective new rate value, which is the rate predicted at the current scheduling instant by considering both the past and the future allocations and assuming that the basic resource entity is allocated to the flow being considered.

In a second aspect, there is provided a device for implementing the method, comprising:

- a first computing unit arranged to be fed at least with information about an accumulated delay in the transmission of the data of each active flow and about a priority assigned to each flow and determining a maximum admitted delay for the respective flow, and to compute, for each flow, a first parameter related with said accumulated delay, and a second parameter, depending on the first parameter and intended to control priority among the different flows;
- a second computing unit arranged to be fed with information about a minimum rate and a peak rate admitted for that flow and with the values of said first and second parameters, and to compute a utility function for each active flow, which function is a non-decreasing function of the flow rate and exhibits a linear dependency on the rate according to said first parameter in a first rate range extending below said minimum rate, and according to said second parameter in a second rate range extending from said minimum rate to said peak rate ($R_i^{max}$).

Said device is part of a scheduler arranged to allocate, at each scheduling instant, basic resource entities to active flows selected based on the values taken by the utility function of each active flow for a respective current rate value, which is the rate predicted at a current scheduling instant by considering both past allocations in an observation window spanning over a first number of consecutive scheduling intervals and a prediction of future allocations in a prediction window spanning over a second number of consecutive scheduling intervals including the current one, and by assuming that a basic resource entity being considered is not allocated to any flow, and for a respective new rate value, which is the rate predicted at the current scheduling instant by considering both the past and the future allocations and assuming that the basic resource entity is allocated to the flow being considered.

According to a further aspect of the invention there is also provided a scheduling method for selecting, among a plurality of active data flows in a wireless communication system with centralised scheduling, the flow to which a basic communication resource entity is to be assigned for transmission during a current scheduling interval, wherein the scheduling exploits the setting of QoS parameters described above.

The invention further provides a base station for a wireless communication system including a scheduler comprising the above device and implementing the above scheduling method, the wireless communication system including at least one such base station, and a software product to be installed in a processor of the base stations of a wireless communication system and comprising a computer program containing instructions for causing said processor to implement a method of setting QoS parameters for a predictive centralised scheduling according to the invention.

Brief description of the drawings

Further objects, characteristics and advantages of the invention will become apparent from the following description of preferred embodiments, given by way of non-limiting example and illustrated in the accompanying drawings, in which:

- Fig. 1 is a schematic block diagram of a mobile communication system in which the invention is employed;
- Fig. 2 is a graph illustrating the operating principles of the invention;
- Fig. 3 is a graph of the utility function used in the invention;
- Fig. 4 is a flow chart of the method of the invention;
- Fig. 5 is a flow chart of a user selection algorithm based on the invention, for the case in which a time slot is the basic resource entity to be allotted to a flow;
- Fig. 6 is a flow chart of a user selection algorithm based on the invention for an OFDMA system, in which a time-frequency chunk is the basic resource entity and a plurality of chunks are to be allotted at each time slot;
- Fig. 7 is a block diagram of a scheduler utilising the method of the invention; and
- Fig. 8 is a comparative graph of the performance of schedulers based on the invention and on prior art techniques

Description of the preferred embodiments

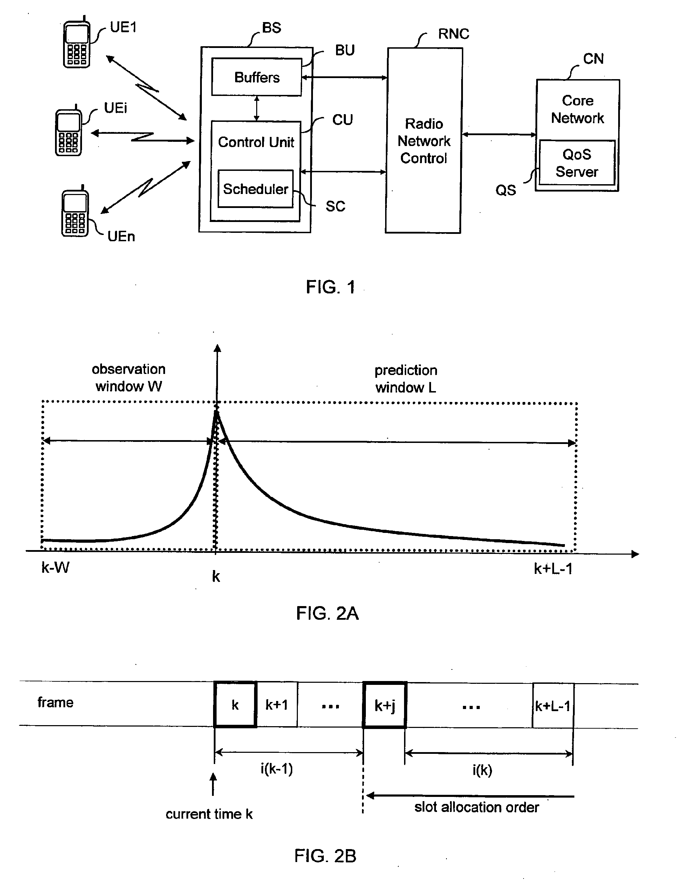

Referring to Fig. 1, there is schematically shown the architecture of a mobile communication system in which the invention is employed. A plurality of user terminals UE1...UEn are served by a base station BS (Node B in the 3rd generation terminology) controlled by a Radio Network Controller RNC, in turn connected to the operator's core network CN. Each user terminal can handle multiple user flows, where each flow has its own QoS requirements and is schedulable independently of the other flows in a manner taking into account the QoS requirements. For instance, the multiple flows can relate to a multimedia connection established by a user.

Base station BS is here schematised by buffers BU where information directed to or coming from users UE1 ...UEn is temporarily stored, and by scheduler SC, which is part of the control units CU of the base station and is entrusted with selecting the users to/from which information is to be transmitted/received at a given scheduling instant in such a way as to optimise the resource exploitation while ensuring a satisfactory quality of service. Scheduler SC performs a predictive scheduling satisfying QoS through a mapping of the user (or more precisely, the flow) requirements and the parameters of the scheduler itself. Such mapping is the subject matter of the invention.

Considering for instance a system conforming to IEEE 802.16 set of standards, the users are to be provided with a broadband wireless access in a whole range of different conditions, ranging from indoor to base coverage urban scenarios, where the users can be stationary or substantially stationary users or mobile users with different velocities. Users UE have access to services having each a specific requirement in term of quality of service (QoS) and scheduler SC allots resources for transmission/reception through a channel-prediction aware algorithm which takes into account the QoS parameters of the individual flows. In systems conforming to the standard, the following QoS parameters are of interest:

- minimum rate $R^{min}$ that has to be assigned to a user flow: i.e., scheduler SC has to be able to satisfy bandwidth requests up to $R^{min}$;
- the maximum sustainable rate or peak information rate $R^{max}$;
- the maximum admitted latency $L^{max}$ between the reception of a packet and its transmission; parameter $L^{max}$ is representative of the priority allotted to the packet flow and, of course, the lower $L^{max}$ the higher the priority P of the flow.

Scheduler SC is supplied with those parameters by a QoS server QS located in the operator's core network CN.
Figs. 2a and 2b graphically illustrate the predictive scheduling technique and a sequence of scheduling instants each defining a scheduling interval or time slot.

For scheduling, the following sliding windows are considered:

- an observation window, comprising W past time slots before current time slot k;
- a prediction window, comprising L future time slots, from current time slot k inclusive to time slot k+L-1.

Note that even if Figure 2A shows a prediction window longer than the observation window, no assumption is made about and no constraint is set to the relative lengths of the windows. In other words, the scales of representation of the two windows are not necessarily the same. The Figure is only qualitative and the length of the prediction window has been exaggerated for sake of clarity of representation of the succession of scheduling time slots in Fig. 2B.

Scheduler SC schedules users' transmissions at a given instant k (current time slot) on the basis of the W past resource allocations and of the prediction of the L future resource allocations in the prediction window. At time slot k scheduler SC schedules users (or more precisely, flows) that, according to the channel prediction, will not receive, in the prediction window, allocations meeting the QoS requirements in terms of $R^{min}$ and $L^{max}$.

The curves in Fig. 2A also show that resource allocations relative to different instants j, $k-W \leq j \leq k+L-1$, are allotted different weights for the current scheduling, time slots closer to the current one being allotted higher weights. This is quite intuitive. Indeed, for past allocations, the most recently achieved transmission rates have higher importance than the past ones, since they reflect the recent channel behaviour, whereas for the future allocations the farther in time a time slot, the higher the uncertainty in channel prediction, and consequently in the allocation.

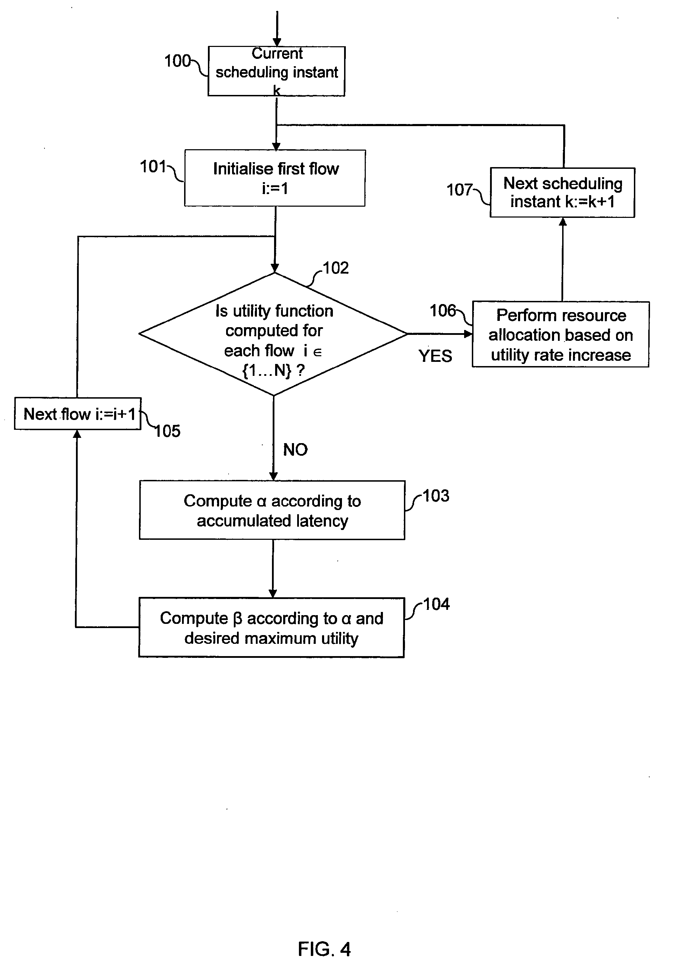

According to the invention, QoS is satisfied through a mapping of the user requirements and the parameters of scheduler SC itself. The resulting predictive scheduling algorithm will now be described in more detail with reference to the flow charts of Fig. 4.

Let be $i \in \{1... N\}$ the set of active flows and k the current scheduling instant.

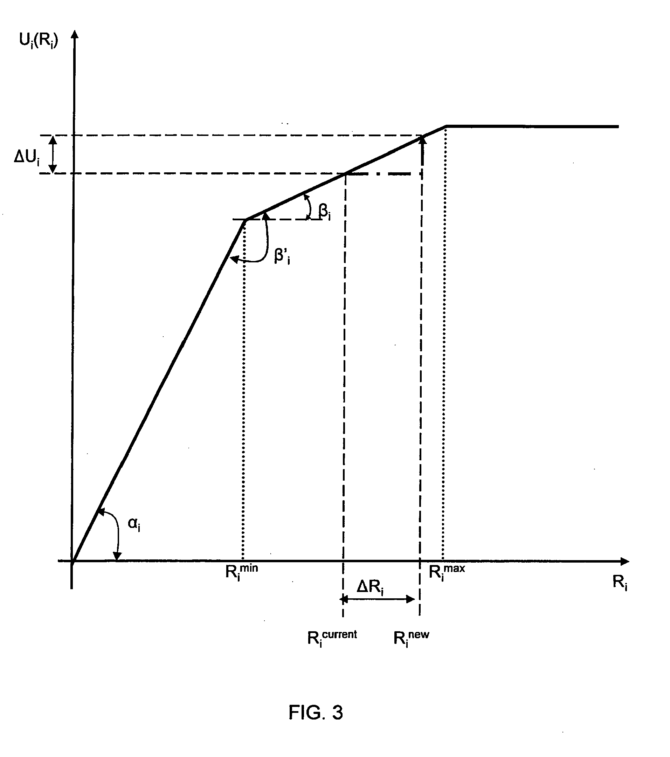

For scheduling at current scheduling instant k (step 100, Fig. 4), scheduler SC determines a possible scheduling solution for all time slots in the prediction window starting from the last one. The determination of the scheduling solution is based on the optimisation of a utility function U(R), R being the rate, which is computed at each scheduling instant for each active flow handled by user terminals UE (Fig. 1) and is such as to precisely map the QoS parameters of the flow. More particularly, according to the invention, the utility function $U_i(R_i)$ for flow $\underline{i}$ has the behaviour depicted in Fig. 3. As shown, the utility function is represented by a broken line comprising three portions. The first portion extends in the region below the minimum rate $R_i^{min}$ to be assigned to flow $\underline{i}$ in order to be able to provide the required service. In that portion, $U_i(R_i)$ is a linear function of rate $R_i$ according to a first proportionality coefficient $P_{1,i}$ that is related with the accumulated latency $L_i^{acc}$ and preferably is the ratio, or is proportional to the ratio, of the accumulated latency $L_i^{acc}$ to the maximum admitted latency $L_i^{max}$. Assuming for sake of simplicity that the first proportionality coefficient $P_{1,i}$ is just the above-mentioned latency ratio, this first portion of utility function $U_i(R_i)$ is expressed by the following relation:

$$U_i(R_i) = p_{1,i} \cdot R_i = L_i^{acc}/L_i^{max} R_i \qquad (1)$$

In other words, the straight line segment representing the first portion of function $U_i(R_i)$ has a slope $\Delta U_i/\Delta R_i = L_i^{acc}/L_i^{max}$ and forms an angle $\alpha_i = \text{arctg } L_i^{acc}/L_i^{max}$ with axis R.

A second portion of $U_i(R_i)$ extends from $R_i^{min}$ to maximum sustainable rate $R_i^{max}$ and is a linear function of rate $R_i$ according to a second proportionality coefficient $P_{2,i}$, which is smaller than $P_{1,i}$ and is related with the priority $P_i$ of the flow (i.e. on $L_i^{max}$ and the maximum $P_{max}$ among the priorities of all active flows (i.e. on $\min\{L_i^{max}\}$). Preferably, the second proportionality coefficient $P_{2,i}$ is the ratio, or is proportional to the ratio, of priority $P_i$ to maximum priority $P_{max}$. Assuming for sake of simplicity that the second proportionality coefficient $P_{2,i}$ is just the above-mentioned priority ratio, this second portion of function $U_i(R_i)$ is expressed by relation:

$$U_i(R_i) = p_{2,i} \cdot R_i + q_i = \cdot (P_i/P_{max}) \cdot R_i + q_i \qquad (2)$$

where $P_i$ and $P_{max}$ have been defined above and $q_i$ is a parameter such that, at $R_i^{min}$, the first and second portions of $U_i(R_i)$ have the same value, i.e. $q_i = p_{1,i} \cdot R_i^{min}$. In other words, the straight line segment representing the second portion of the utility function has a slope $\Delta U_i/\Delta R_i = P_i/P_{max}$ and forms, with axis R, an angle $\beta_i = \text{arctg } P_i/P_{max}$. It is immediately apparent that an angle $\beta_i' = (\pi - \alpha_i) + \beta_i$ is defined by the two segments of function $U_i(R_i)$.

As it can be readily appreciated, an allocation of resources resulting in exceeding the maximum rate $R_i^{max}$ is useless in that no quality enhancement can be obtained for the concerned flow. Thus, the utility function reaches a

maximum at $R_i^{max}$ and it is assigned a constant value in the region above $R_i^{max}$.

Angle $\alpha$ (or coefficient $p_1$) can be acted upon to increase the priority of the respective traffic flow according to latency constraints. If the parameter is increased, the scheduler gives the flow a higher priority since it has to satisfy requirements of flows that are suffering from an increase of latency. In turn angle $\beta$ (or coefficient $p_2$) allows acting on the fairness level to be provided to flows with the same QoS requirements, in that a decrease of $\beta$ leads to a decrease in the throughput and hence to an increase in fairness.

The broken-line behaviour of the utility function shown in Fig. 3 enables a very accurate mapping of the QoS parameters, better than that attainable with a logarithmic function such as that of the prior art, as it can be immediately appreciated.

Thus, starting with the first flow (step 101, Fig. 4), the first step of the algorithm is calculating the utility function, that is determining proportionality coefficients $p_{1,i}$, $p_{2,i}$ or the corresponding angles $\alpha_i$, $\beta_i$ (or $\beta_i'$), as indicated at steps 103, 104 in Fig. 4. The calculations are then repeated for the subsequent flow i+1 (step 105). When the check at step 102 indicates that all active flows have been considered, resource allocation, i.e. flow selection, is performed (step 106) by taking into account the utility functions of the different flows and, more particularly, the increase in the utility function resulting from the possible assignment of resources to the flow. The cycle is then repeated for the scheduling at the subsequent scheduling instant k+1 (step 107).

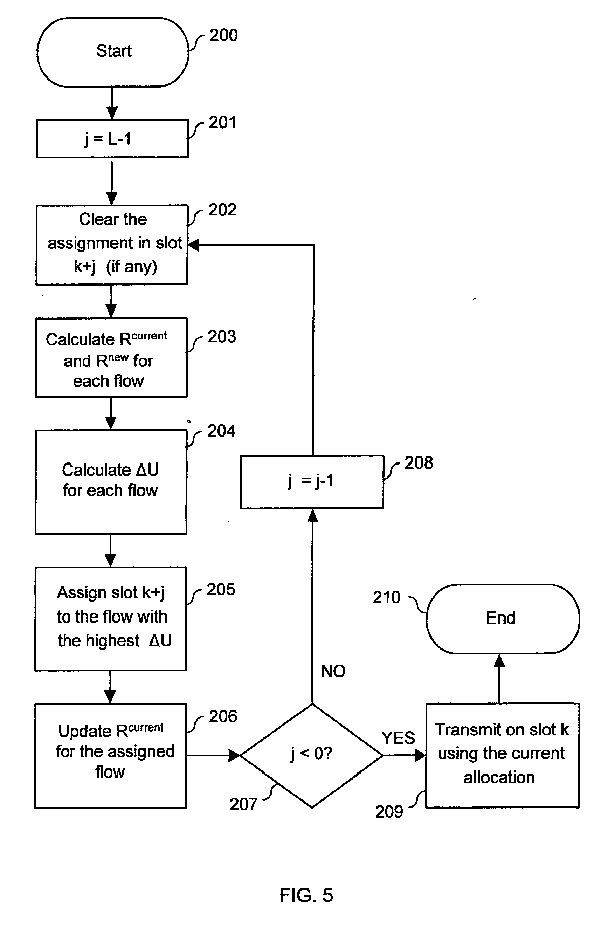

Fig. 5 is a flow chart of a user selection algorithm assuming that a time slot is the basic resource entity to be allotted to a flow.

After the start (step 200), the last time slot (k+j = k+L-1) of the prediction window relative to scheduling instant k is processed first (step 201). The scheduler checks whether any allocation for that time slot already exists and, in the affirmative, clears it (step 202). At step 203, a current value $R_i^{current}$ and a new value $R_i^{new}$ of the rate of each active flow i is computed. $R_i^{current}$ is the value for the rate of flow $\underline{i}$ in time slot k+L-1 as predicted at time slot k by taking into account the allocations in both the observation and the prediction windows and assuming that time slot k+L-1 being processed is not assigned (a possible assignment of the time slot has been cleared). $R_i^{new}$ is the value for the rate of flow $\underline{i}$ in time slot k+L-1 as predicted at time slot k by taking into account the allocations in both the observation and the prediction window but assuming that slot k+L-1 is assigned to the current flow. Advantageously, rates $R_i^{current}$ and are $R_i^{ne}$ computed according to the following relation:

$$R(k) = \frac{\sum_{h=1}^{W}(1-\eta)^h R_{past}(k-h) + \sum_{j=0}^{L-1}(1-\mu)^j \hat{R}(k+j)}{\sum_{h=1}^{W}(1-\eta)^h + \sum_{j=0}^{L-1}(1-\mu)^j}$$

where $R_{past}(x)$ is the rate in time slot x of the observation window, $\hat{R}(y)$ is the predicted rate the rate in time slot y of the prediction window, W is the observation window size, L is the prediction window size, $\eta$ is the weight for the past time slots and $\mu$ is the weight for the future time slots.

Then, increments $\Delta U_i = U_i(R_i^{new}) - U_i(R_i^{current})$ of the utility functions are computed for all active flows (step 204). When all flows have been processed, the slot is assigned to the flow with the highest $\Delta U$ (step 205), and the current rate $R^{current}$ of the flow is updated to $R^{new}$ (step 206). Then, j is decreased by 1 (step 208) and steps 202 to 206 are repeated for slot k+L-2 and so on, until the current time slot k is processed. When the check at step 207 indicates that all time slots in the prediction window have been considered, i.e. j < 0, transmission on slot k takes place with the allocation determined (step 209) and the process for scheduling instant k ends.

Should several flows exhibit the same $\Delta U$, the flow to be transmitted at that time slot can be randomly chosen.

As a conclusion, both in the region below $R_i^{min}$ and in the region between $R_i^{min}$ and $R_i^{max}$ the invention tends to favour the flows which have the better channel, so that a good efficiency in reaching both $R_i^{min}$ and $R_i^{max}$ (and hence in enabling a flow to obtain the service and to attain the maximum quality after having obtained the service) is achieved. The unfairness inherent in the procedure is however only apparent, since the slope of the function changes at $R_i^{min}$ so that the flows being favoured also can change.

In systems of interest for the invention, like those conforming to IEEE 802.16 set of standards (e.g. WiMax systems) or to the so called Universal Mobile Telecommunications System (UMTS) Terrestrial Radio Access Network (UTRAN) Long Term Evolution (LTE), OFDMA technique is often used in downlink. At MAC layer, the basic resource scheduling entity is then a time-frequency tile ("chunk"), which comprises a given number of subcarriers in the frequency domain and has duration of a given number of OFDM symbol periods in the time domain. The time intervals at which scheduling is performed may correspond to a frame time, where a frame is a group of chunks made of predetermined number of chunks in both the time and the frequency domain.

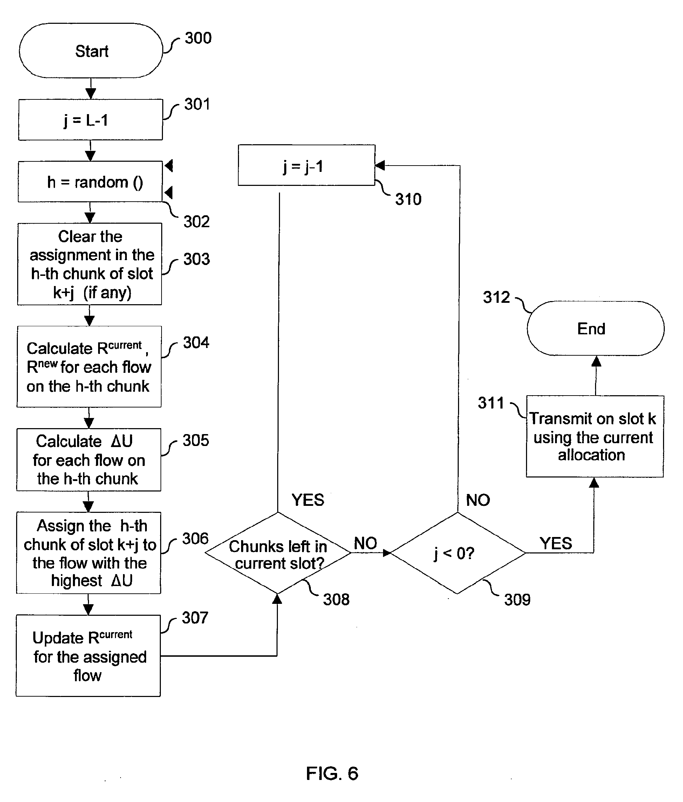

In application to OFDMA, the scheduling algorithm is as shown in Fig. 6. The principles of the algorithm are similar to those described in connection with Fig. 5, but several basic resource entities are to be assigned during a time slot. Like in Fig. 5, the last time slot in the prediction window is examined first (step 301). The set of available chunks in time slot k+L-1 is considered and a chunk $\underline{h}$ is randomly selected within the set (step 302). After having cleared any allocations of the chunk (step 303), $R^{current}$, $R^{new}$ and $\Delta U$ are computed for all flows (steps 304, 305), by applying the same principles as set forth above, yet in connection with a chunk instead of a time slot, and chunk $\underline{h}$ of time slot k+L-1 is assigned to the flow with the highest $\Delta U$ (step 306). Then, at step 307 the rate $R^{current}$ for the selected flow is updated to $R^{new}$, at step 308 it is checked whether there are still chunks left in the current slot and in the affirmative, steps 302 to 307 are repeated. During such iterations, the chunks already allocated are no longer considered for the random choice at step 302. When the check at step 308 reveals that all chunks in time slot k+L-1 have been assigned, steps 302 to 308 are iterated for all subsequent time slots in the prediction window and, when the check at step 309 indicates that all time slots have been considered, transmission on slot k takes place with the allocation determined (step 310) and the process for the current time slot ends (step 311).

The method described above can be implemented by a software product to be installed in a memory of a processor or computer in control units CU of base station BS, and including a computer program arranged to cause such base station to perform a predictive QoS scheduling based on a mapping of user requirements and scheduler parameters as described above.

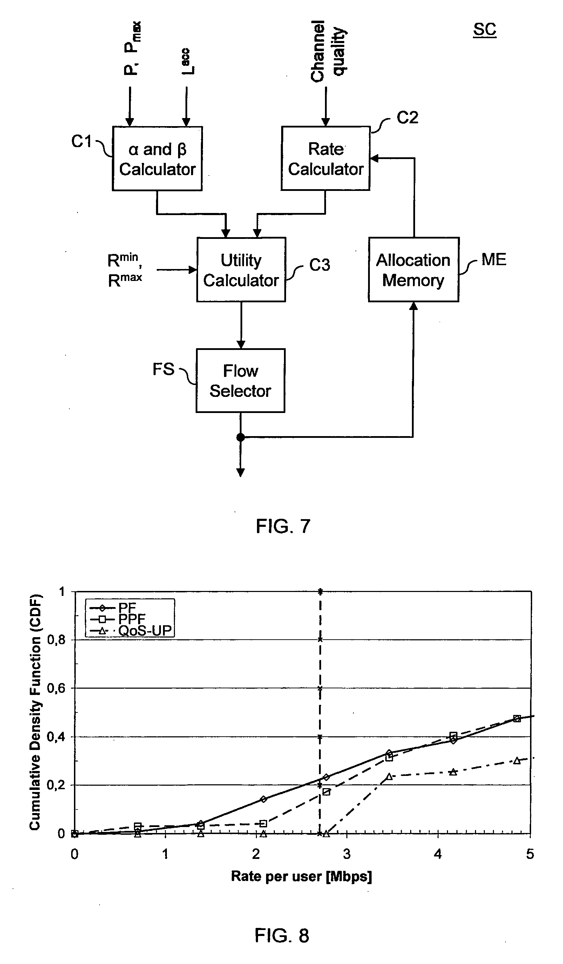

Of course, scheduler SC (Fig. 1) could also be constructed as a hardware unit. A schematic functional block diagram of such hardware implementation is depicted in Fig. 7.

Scheduler SC comprises:

- three computing units C1, C2, C3 respectively arranged to calculate: parameters $\alpha$, $\beta$ (or factors p1, p2); rates $R^{current}$ and $R^{new}$; and values $U^{current}$ and $U^{new}$ of utility function U corresponding to rates $R^{current}$ and $R^{new}$ as well as the utility increase $\Delta U$ when the flow rate passes from $R^{current}$ to $R^{new}$;
- a flow selector SC; and
- an allocation memory ME that stores the allocations of the basic resource entities of the time slots forming the sliding observation and prediction windows.

It should be appreciated that units C1 and C3 implement the QoS mapping described above.

For its operation, the first computing unit C1 receives the information about the maximum latency $L_i^{max}$ (i.e. priority $P_i$) and maximum priority $P_{max}$ from QoS server QS (Fig. 1), and receives the information about the accumulated latency $L_i^{acc}$, determined through measurements performed at the concerned user equipment UE and/or at the base station BS, from the proper circuitry in control units CU of base station BS. The second computing unit C2 receives information about the quality of the channel (determined again through measurements performed at the concerned user equipment UE and/or at the base station BS) from the proper circuitry in control units CU of base station BS, and receives the information about the past and the predicted future allocations from allocation memory ME and properly weights them. The third computing unit C3 receives the proportionality coefficients and the rates computed from the first and second computing units C1 and C2, determines the corresponding values of U and $\Delta U$ and supplies the computed values to flow selector FS which recognises the maximum $\Delta U$ and emits the information about the selected flow, updating, when necessary, memory ME.

Note that the three computing units C1 - C3 may comprise as many sections as are the active flows, in which case each section will be fed with the parameters concerning the associated flow, or, preferably, they may operate sequentially on the different flows. Preferably moreover, for each flow, the second and third computing units C2, C3 and flow selector FS operate sequentially on the different time slots of the prediction window and, in case of the application to the OFDMA case, on the different chunks of the time slot. Memory ME in turn receives a clearing signal for clearing the memory location relevant to the basic resource to be assigned (e.g. a time slot or a chunk), before the second unit C2 computes the rates. The timing signals governing the evolution of the operations and the clearing are not indicated for sake of simplicity of the drawing.

Table I shows a comparison of the performance, in terms of maximum throughput and fairness, of a scheduling algorithm based on the invention (indicated as QoS-UP, i.e. QoS scheduler with Utility Prediction), for a certain number of values of $\alpha$ and $\beta$, and of the proportional fair (PF) and predictive proportional fair (PPF) algorithms. The simulations for the invention have been made for the OFDMA case, for a system with 100 MHz bandwidth and frequency division duplexing at the physical layer, assuming that a chunk comprises a 12 OFDM symbol period and 8 subcarriers and that scheduling is performed at frame time, with each frame including 2 chunks in the time domain and 128 chunks in the frequency domain. For both the invention and the PPF algorithm a prediction window with length 8 has been assumed. Fairness index is represented by Jain's fairness index, well known to the skilled in the art. Note that the simulations have been performed by considering the same utility function, i.e. the same angles $\alpha$ and $\beta'$, for all flows.

TABLE I

| Scheduler | $\alpha$ | $\beta'$ | Max Throughput [Mbps] | Fairness Index |
|---|---|---|---|---|
| QoS-UP | 60˚ | 180˚ | 141 | 0.7 |
| QoS-UP | 80˚ | 160˚ | 122 | 0.74 |
| QoS-UP | 85˚ | 155˚ | 116 | 0.77 |
| PF | - | - | 112 | 0.765 |
| PPF | - | - | 126 | 0.768 |

The table shows that the scheduler of the invention has performance, in terms of maximum throughput, that is at least comparable with that of the known algorithms, while providing substantially similar fairness conditions. However, the cumulative density function of user rate shown in Fig. 8 demonstrates that the invention actually guarantees the minimum rate (2.8 Mbps) to all flows, i.e. all users are able to get the service, whereas this cannot be achieved by the known algorithms.

It is evident that the above description has been given by way of non-limiting example and that changes and modifications can be made without departing from the scope of the invention as defined in the appended claims. In particular, even if the method has been described in detail in terms of allocation of a time slot or a chunk, it can be employed for scheduling allocation of any resource. Examples could be: assigning a resource comprising e.g. a time slot, a frequency and a spreading code in systems providing for a combined Time Division, Frequency Division and Code Division Multiple Access (TDMA/FDMA/CDMA); assigning spreading codes in other CDMA systems; assigning sub-slots of a scheduling interval; and so on.

**Claims**

1.  A method of setting Quality-of-Service, QoS, parameters relevant to a plurality of active data flows for predictive centralised user scheduling in a wireless communication system, the method comprising, at each scheduling instant, the steps of:

    - computing (103, 104, 105) for each active flow, a first parameter related with an accumulated delay of the data of the flow and a second parameter, depending on the first parameter and intended to control a priority among the different flows;
    - computing (102 to 105), by using said first and second parameters, a utility function ($U_i$) for each active flow, which function is a non-decreasing function of the flow rate and exhibits a linear dependency on the rate according to said first parameter in a first rate range extending below a minimum rate ($R_i^{min}$) admitted for the flow, and according to said second parameter in a second rate range extending from said minimum rate to a maximum rate ($R_i^{max}$); and
    - allocating (106) a basic resource entity to an active flow selected based on the values taken by the utility function ($U_i$) of each active flow for a respective current rate value ($R_i^{current}$), which is the rate predicted at a current scheduling instant by considering both past allocations in an observation window spanning over a first number of consecutive scheduling intervals and a prediction of future allocations in a prediction window spanning over a second number of consecutive scheduling intervals including the current one, and by assuming that the basic resource entity is not allocated to any flow, and a respective new rate value ($R_i^{new}$), which is the rate predicted at the current scheduling instant by considering both the past and the future allocations and assuming that the basic resource entity is allocated to the flow being considered.

2.  The method as claimed in claim 1, wherein said first parameter is related with the ratio of the accumulated delay to a maximum admitted delay for the respective flow.

3.  The method as claimed in claim 1 or 2, wherein said second parameter is related with the ratio of a priority assigned to the respective flow to a maximum among the priorities of all active flows.

4.  The method as claimed in any preceding claim, wherein said step of computing the utility functions further comprises assigning a respective constant value to each utility function for rates exceeding said maximum rate ($R_i^{max}$) of the respective flow.

**5.** The method as claimed in any preceding claim, wherein said allocating step (106) comprises assigning (205; 306) the basic resource entity to the flow exhibiting the best increase in the utility function value when the flow rate is changed from said current value ($R_i^{current}$) to said new value ($R_i^{new}$).

**6.** The method as claimed in any preceding claim, wherein said allocating step comprises iteratively computing the current and new rates (203, 204; 304, 305) for all scheduling intervals in the prediction window, starting with the last scheduling interval (201; 301) in the window and processing, at each iteration, an immediately preceding scheduling interval (208; 310) until the current one, the flow selected at the iteration concerning the current scheduling interval being assigned the basic resource entity for transmission in such current interval.

**7.** The method as claimed in claim 6, wherein a single basic resource entity is to be assigned at each scheduling interval, and said allocating step (106) comprises, at each iteration:

a1) clearing (202) a previously predicted assignment, if any, of the basic resource entity in the processed scheduling interval in the prediction window;
b1) computing (203, 204) the current and the new rates ($R_i^{current}$, $R_i^{new}$) and the resulting increase ($\Delta U_i$) in the utility function for all flows;
c1) selecting (205), for assigning the basic resource entity in the processed scheduling interval, the flow with the maximum increase in the utility function;
d1) updating (206) the rate from the current to the new value for the flow selected at step c1).

**8.** The method as claimed in claim 7, wherein said basic resource entity is a whole scheduling interval.

**9.** The method as claimed in claim 6, wherein a plurality of basic resource entities are to be assigned to a plurality of flows during each scheduling interval, and the allocating step comprises, at each iteration:

a2) selecting a first basic resource entity (302);
b2) clearing (303) a previously determined assignment, if any, of the selected basic resource entity;
c2) computing (304, 305) the current and the new rates ($R_i^{current}$, $R_i^{new}$) and the resulting increase ($\Delta U_i$) in the utility function for all flows;
d2) selecting (306), for assigning the first basic resource entity, the flow with the maximum increase in the utility function;
e2) updating (307) the rate from the current to the new value for the flow selected at step d2);
f2) selecting a new basic resource entity, if basic resource entities are left (309) in the scheduling interval being processed, and iterating steps a2) to e2) until all basic resource entities in the scheduling interval being processed have been assigned.

**10.** The method as claimed in claim 9, wherein the basic resource entity is randomly selected at step a2).

**11.** The method as claimed in claim 10, wherein at each iteration of step a2), the random selection is made out of the basic resource entities that have not been assigned in previous iterations.

**12.** The method as claimed in any of claims 9 to 11, wherein the communication system is an orthogonal frequency division multiple access, OFDMA, system and said basic resource entity is a time-frequency chunk having a duration in the time domain corresponding to the duration of a predetermined number of OFDM symbols and comprising a predetermined number of subcarriers in the frequency domain.

**13.** The method as claimed in any of claims 9 to 12, wherein the communication system is a system conforming to the IEEE 802.16 set of standards or to the specifications for the Universal Mobile Telecommunications System Terrestrial Radio Access Network Long Term Evolution, UTRAN-LTE.

**14.** The method as claimed in any of claims 9 to 11, wherein the communication system is a code division multiple access, CDMA, communication system and said basic resource entity is a spreading code.

**15.** The method as claimed in claim 14, wherein the communication system is a system conforming to the specifications for the Universal Mobile Telecommunications System, UMTS.

16. A predictive scheduling method for selecting, among a plurality of active data flows in a wireless communication system with centralised scheduling, the flow to which a basic communication resource entity is to be assigned for transmission during a current scheduling interval, **characterised in that** the scheduling exploiting a setting of QoS parameters as claimed in any preceding claim.

17. A device for setting Quality-of-Service parameters relevant to a plurality of active data flows for predictive centralised user scheduling in a wireless communication system, **characterised in that** it comprises

- a first computing unit (C1) arranged to be fed at least with information about an accumulated delay in the transmission of the data of each active flow and about a priority assigned to each flow and determining a maximum admitted delay for the respective flow, and to compute, for each flow, a first parameter related with said accumulated delay, and a second parameter, depending on the first parameter and intended to control priority among the different flows;
- a second computing unit (C3) arranged to be fed with information about a minimum rate ($R_i^{min}$) and a peak rate ($R_i^{max}$) admitted for that flow and with the values of said first and second parameters, and to compute a utility function ($U_i$) for each active flow, which function is a non-decreasing function of the flow rate and exhibits a linear dependency on the rate according to said first parameter in a first rate range extending below said minimum rate ($R_i^{min}$), and according to said second parameter in a second rate range extending from said minimum rate to said peak rate ($R_i^{max}$);

and **in that** said device (C1, C3) is part of a scheduler (SC) arranged to allocate, at each scheduling instant, basic resource entities to active flows selected based on the values taken by the utility function ($U_i$) of each active flow for a respective current rate value ($R_i^{current}$), which is the rate predicted at a current scheduling instant by considering both past allocations in an observation window spanning over a first number of consecutive scheduling intervals and a prediction of future allocations in a prediction window spanning over a second number of consecutive scheduling intervals including the current one, and by assuming that a basic resource entity being considered is not allocated to any flow, and for a respective new rate value ($R_i^{new}$), which is the rate predicted at the current scheduling instant by considering both the past and the future allocations and assuming that the basic resource entity is allocated to the flow being considered.

18. The device as claimed in claim 17, wherein said first computing unit (C1) is arranged to compute a ratio between the accumulated delay and the maximum admitted delay and to obtain said first parameter from said ratio.

19. The device as claimed in claim 17 or 18, wherein said first computing unit (C1) is arranged to be fed also with information about a maximum among the priorities of all active flows, to compute a ratio between the priority of each flow and the maximum priority and to obtain said second parameter for each flow from said ratio.

20. The device as claimed in any of claims 17 to 19, wherein said second computing unit (C3) is arranged to generate a constant value for said utility function for rates exceeding the maximum rate.

21. The device as claimed in any of claims 17 to 20, wherein said scheduler (SC) further comprises:

- a third computing unit (C2) arranged to compute said current and new rate values ($R_i^{current}$, $R_i^{new}$) for each active flow and to supply said values to said second computing unit (C3) for the calculation of corresponding current and new values of the utility function for each flow and of a difference between said new and current values of the utility function; and
- a selection unit (FS) which is connected to the output of said second computing unit (C3) and is arranged to identify, for allocation of a basic resource entity, the flow which exhibits the largest increase in the utility function when the flow rate is changed from said current value ($R_i^{current}$) to said new value ($R_i^{new}$).

22. The device as claimed in claim 21, wherein second computing unit (C3) and said third computing unit (C2) are arranged to iteratively compute the current and new rates, and the current and new values in the utility function and its increase, respectively, for all scheduling intervals in the prediction window, starting with the last scheduling interval in the window and processing at each iteration an immediately preceding scheduling interval back to the current one, until a flow for assigning the basic resource in the current scheduling interval has been selected.

**23.** The device as claimed in any of claims 17 to 22, wherein:

- said selection unit (FS) is arranged to select, at each scheduling interval, a plurality of flows to which a plurality of basic resource entities are to be assigned, and
- said second computing unit (C3) and said third computing unit (C2) are arranged to compute the current and new rates, and the current and new values of the utility function and its increase, respectively, first for all basic resource entities in a last scheduling interval in the prediction window, and then to iterate the computations for the basic resource entities in the remaining scheduling intervals in the prediction window, by going back at each iteration by one interval towards the current scheduling interval, the selecting unit (FS) being arranged to select a flow for assigning the basic resource in the current scheduling interval at the end of the iterations.

**24.** The device as claimed in any of claims 17 to 23, wherein said scheduler (SC) further comprises a memory unit (ME) connected between the output of said flow selector (FS) and the input of said third computing unit (C2) and arranged to store the allocations determined during the observation and the prediction windows.

**25.** A base station (BS) for a wireless communication system, including a scheduler (SC) comprising a device as claimed in any of claims 17 to 24.

**26.** A wireless communication system including at least one base station (BS) as claimed in claim 24.

**27.** The wireless communication system as claimed in claim 26, wherein said system is chosen out of systems conforming to the IEEE 802.16 set of standards or to the specifications for the Universal Mobile Telecommunications System or the Universal Mobile Telecommunications System Terrestrial Radio Access Network Long Term Evolution.

**28.** A software product to be installed in a processor (CU) of a base station (BS) of a wireless communication system, the software product comprising a computer program containing instructions for causing said processor to implement a method of setting Quality-of-Service parameters relevant to a plurality of active data flows for an predictive user scheduling as claimed in any of claims 1 to 15.

FIG. 1

FIG. 2A

FIG. 2B

FIG. 3

100 — Current scheduling instant k

101 — Initialise first flow i:=1

107 — Next scheduling instant k:=k+1

102 — Is utility function computed for each flow i ∈ {1...N} ?

106 — Perform resource allocation based on utility rate increase

YES

NO

105 — Next flow i:=i+1

103 — Compute $\alpha$ according to accumulated latency

104 — Compute $\beta$ according to $\alpha$ and desired maximum utility

FIG. 4

Start — 200

j = L-1 — 201

Clear the assignment in slot k+j (if any) — 202

Calculate $R^{current}$ and $R^{new}$ for each flow — 203

Calculate $\Delta U$ for each flow — 204

Assign slot k+j to the flow with the highest $\Delta U$ — 205

Update $R^{current}$ for the assigned flow — 206

j = j-1 — 208

210 — End

NO

j < 0? — 207

YES

Transmit on slot k using the current allocation — 209

FIG. 5

Start — 300

j = L-1 — 301

h = random () — 302

Clear the assignment in the h-th chunk of slot k+j (if any) — 303

Calculate $R^{current}$, $R^{new}$ for each flow on the h-th chunk — 304

Calculate $\Delta U$ for each flow on the h-th chunk — 305

Assign the h-th chunk of slot k+j to the flow with the highest $\Delta U$ — 306

Update $R^{current}$ for the assigned flow — 307

j = j-1 — 310

Chunks left in current slot? — 308

j < 0? — 309

Transmit on slot k using the current allocation — 311

End — 312

YES

NO

NO

YES

FIG. 6

FIG. 7

FIG. 8

**European Patent Office**

## EUROPEAN SEARCH REPORT

Application Number

EP 07 42 5817

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MHERJOO M ET AL: "Opportunistic Fair Scheduling for the Downlink of IEEE 802.16 Wireless Metropolitan Area Networks" PROCEEDINGS OF THE 3RD INTERNATIONAL CONFERENCE ON QUALITY OF SERVICE IN HETEROGENEOUS WIRED/WIRELESS NETWORKS, vol. 191, 7 August 2006 (2006-08-07), - 9 August 2006 (2006-08-09) pages 1-9, XP002487691 Waterloo, Ontario, CA Retrieved from the Internet: URL:http://portal.acm.org/citation.cfm?id= 1185441> [retrieved on 2008-07-09] | 1 | INV. H04L12/56 |
| A | * abstract * <br><br> * page 1, right-hand column, line 5 - page 2, left-hand column, line 10 * <br> * page 2, right-hand column, last line - page 5, right-hand column, line 15 * <br> ----- | 17,25, 26,28 | |
| A | BANG H J ET AL: "A CHANNEL PREDICTIVE PROPORTIONAL FAIR SCHEDULING ALGORITHM"[Online] May 2005 (2005-05), pages 1-17, XP002487692 Tunisia Retrieved from the Internet: URL:http://www.signal.uu.se/Research/PCCWI P/Tunisia/WIP05_Bang.pdf> [retrieved on 2008-07-09] * the whole document * <br> ----- | 1,17,25, 26,28 | TECHNICAL FIELDS SEARCHED (IPC) <br><br> H04L |

The present search report has been drawn up for all claims

| Place of search | Date of completion of the search | Examiner |
|---|---|---|
| The Hague | 10 July 2008 | Behringer, Lutz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0101722 A1

- WO 0101722 A

**Non-patent literature cited in the description**

- **P. VISWANATH ; D. TSE ; R. LAROIA.** Opportunistic Beamforming Using Dumb Antenna. *IEEE Transactions on Information Theory,* June 2002, 1277-1294
- **H. J. BANG ; T. EKMAN ; D. GESBERT.** Channel Predictive Proportional Fair Scheduling. *IEEE Transactions on Wireless Communications,* 20 September 2006, http://www.eurecom.fr/∼gesbert

- **G. SONG ; Y. LE.** ''Cross-Layer Optimization for OFDM Wireless Networks - Part I: Theoretical Framework'', and ''Cross-Layer Optimization for OFDM Wireless Networks - Part II: Algorithm Development''. *IEEE Transactions on Wireless Communications,* 614-624625-634